# EUROPEAN PATENT APPLICATION

(11) **EP 1 759 791 A1**
(43) Date of publication of application: **07.03.2007**
(21) Application number: 05077019.7
(22) Date of filing: 05.09.2005
(51) Int. Cl.: B22F 3/10, B29C 67/00

(54) **Apparatus and method for building a three-dimensional article**

(71) Applicant: Nederlandse Organisatie voor Toegepast Wetenschappelijk Onderzoek TNO, 2628 VK The Hague (NL)
(72) Inventor: Feenstra, Frits Kornelis, 5673 RM Nuenen (NL)
(74) Representative: Winckels, Johannes Hubertus F.

(57) **Abstract**

The invention provides an apparatus for building a three-dimensional article in sequential cross-sectional layers, which apparatus comprises: a powder delivery system comprising one or more reservoirs (1) for delivering a powder and a powder spreading system (2); a printing system (10) for delivering a liquid; a build chamber (3) comprising a outer wall, an inner wall and a build platform (7,8) which is movable along the inner wall of the build chamber; and a powder recovery system (11); wherein more than 25% of the outer wall of the build chamber is in communication with the powder recovery system and/or the build platform is capable of releasing unused powder (directly) from the build chamber in a downward direction into the powder recovery system. The invention further provides a method building a three-dimensional article wherein use is made of said apparatus.

## Description

The present invention relates to an apparatus for building a three-dimensional article in sequential cross-sectional layers, and a method for building such an article wherein use is made of said apparatus.

There is increasing demand for the direct production of high strength, technically useful three-dimensional articles from engineering CAD data.

Numerous techniques have been proposed, largely yielding articles which are fragile and consequently of short term or intermediate use.

In US 4,575,330 a method has been described of laser addressing of liquid and paste photopolymers. Though said method is highly successful, this technology requires laboratory standard post processing requirements and skilled operatives, and results in a state of art smooth surface but with somewhat limited possibilities for direct use articles.

Another technique is extrusion deposition and is, for instance, described in US 6,869,559, and yields very good properties, e.g. thermoplastic properties, in the final article. However, the process is slow and requires wet processing to remove support structures.

In US 5,136,515 a direct jetting system using curable fluids has been described. These are fast systems, but all require post processing and removal/disposal of support structures.

In US 4,938,816 a powder-based system is described wherein use is made of a high power CO₂ laser to sinter the powders. Such powder based systems are of interest because these can be self-supporting as the three dimensional article is being formed. Although laser sintering can yield high strength article approaching true thermoplastics, the process is slow and the resultant surface quality is rough.

Another powder based system uses binder jetting processes, largely based on aqueous jetted materials and has, for instance, been described in US 5,204,055. This system is more rapid but results in fragile models which require further infiltration processes to achieve high strengths.

In WO 02/064354 A1 a three-dimensional structured printing process has been described wherein subsequent layers of powder material are applied on top of each other, whereby the respective powder layers contain a reactive or active component which components react on contact to form a solid lamina in the required pattern, which is repeated until the desired solid article is formed.

Many processes for building three-dimensional articles are conventionally carried out in an apparatus that comprises a powder spreading system, a printing system for delivering a binder material, a building chamber for forming the desired article, and a powder removal system, whereby excess powder from the powder spreading system is fed into the powder recovery system via an opening slit arranged at one end of the powder spreading system and build chamber. Such an apparatus has, for example, been described in US 2001/0045678 A1.

However, such an apparatus leaves considerable room for improvement since the powder spreading system becomes quite messy due to excess powder which complicates the production process. In addition, there is a considerable production of waste material that cannot be re-used.

Object of the present invention is to provide an apparatus for building a three-dimensional article which apparatus is relatively simple and at the same time facilitates a cleaner production process, whereby unused powder material can be re-used in a most efficient manner.

It has now been found that this can be realised when use is made of a build chamber of which a considerable part is in direct contact with a powder recovery system.

Accordingly, the present invention relates to an apparatus for building a three-dimensional article in sequential cross-sectional layers, which apparatus comprises: a powder delivery system comprising one or more reservoirs for delivering a powder and a powder spreading system; a printing system for delivering a liquid; a build chamber wherein the article is built comprising a outer wall, an inner wall and a build platform which is movable along the inner wall of the build chamber; and a powder recovery system; wherein the build platform is capable of releasing unused powder directly from the build chamber in a downward direction into the powder recovery system.

The present invention further relates to an apparatus for building a three-dimensional article in sequential cross-sectional layers, which apparatus comprises: a powder delivery system comprising one or more reservoirs for delivering a powder and a powder spreading system; a printing system for delivering a liquid; a build chamber wherein the article is built comprising a outer wall, an inner wall and a build platform which is movable along the inner wall of the build chamber; and a powder recovery system; wherein more than 25% of the outer wall of the build chamber is in communication with the powder recovery system.

In addition, the present invention also relates to an apparatus for building a three-dimensional article in sequential cross-sectional layers, which apparatus comprises: a powder delivery system comprising one or more reservoirs for delivering a powder and a powder spreading system; a printing system for delivering a liquid; a build chamber wherein the article is built comprising a outer wall, an inner wall and a build platform which is movable along the inner wall of the build chamber; and a powder recovery system; wherein more than 25% of the outer wall of the build chamber is in communication with the powder recovery system; and wherein the build platform is capable of releasing unused powder in a downward direction into the powder recovery system.

Preferably, the build platform is capable of releasing the unused powder directly from the build chamber in a downward direction into the powder recovery system. This means that unused powder can be released from the build platform whilst the build platform is maintained within the build chamber. In other words, the build platform does not need to be removed from the build chamber before unused powder can be released from the build platform.

The use of the apparatus in accordance with the present invention facilitates improved production processes for building three-dimensional articles. Moreover, a considerably simplified apparatus to fabricate three-dimensional articles is provided, whereby the need for supports is removed, and unused powders can be fully recycled.

In the context of the present invention unused powder is defined as powder that is not included in the article to be built, i.e. it may includes fresh powder as well as recycled powder.

In the various embodiments of the apparatus according to the present invention more than 25% of the outer wall of the build chamber is in communication with the powder recovery system. This means that unused powder material can very attractively be removed from the build platform and passed to the powder recovery system. Preferably, at least 50% of the outer wall of the build chamber is in communication with the powder recovery system. More preferably, at least 75% of the outer wall of the build chamber is in communication with the powder recovery system.

Suitably, the more than 25%, more preferably the at least 50%, and most preferably the at least 75% of the outer wall of the build chamber is in direct communication with the powder recovery system, which means that unused powder material can directly be passed from the build platform to the powder recovery system.

An advantage of the present apparatus is that a considerable part of the powder recovery system is in direct communication with the build chamber thereby creating sufficient space for cleaning the article once it has been prepared and removed from the build platform. For these cleaning purposes, said space may contain mechanical means for stirring or moving the article to remove any excess powder.

The build platform can suitably have the form of a square, rectangle, a circle or an oval.

Suitably, the printing system of the apparatus in accordance with the present invention comprises one or more nozzles. Preferably, the printing system comprises a plurality of nozzles. More preferably, the nozzles form part of an inkjet printer or a device including a set of nozzles generally equivalent to an inkjet print head. Preferably, the nozzles operate on the principles of piezo inkjet technology. Preferably, the printing system comprises two or more print heads. Suitable examples of inkjet print heads to be used in accordance with the present invention include those commercially available such as, for instance Xaar (Leopard, XJ-series, Omnidot-series), Spectra / Dimatix (Nova, Galaxy, SL-series, M-class) and Trident (PixelJet, UltraJet), Image and Domino.

Preferably, the size of the nozzle openings is the range 10 to 100 µm and/or the size of the applied droplets is in the range 5 to 100 µm, although the nozzle openings may be smaller than 1 µm, even as small as a few nanometres, thus allowing correspondingly sized droplets to be applied.

The powder delivery system of the apparatus according to the present invention comprises one or more reservoirs for delivering a powder. Preferably, the powder delivery system comprises a plurality of reservoirs for delivering a powder.

It will be understood that different types of powder material can be used in the respective layers. Hence, the respective reservoirs may each contain a different type of powder material. Preferably, the respective reservoirs contain a similar type of powder material.

Suitably, the build platform of the build chamber comprises an upper structure provided with openings and a bottom structure that can be opened or removed to release unused powder through the openings of the upper structure. Preferably, the upper structure comprises a mesh tray, a grill or a grid.

Suitably, the bottom structure of the build platform comprises parts that are openable, collapsible or removable. Collapsible parts may suitably comprise flaps. Preferably, the bottom structure comprises parts that are openable, for instance parts that can be opened by turning them around their rotary shafts. Preferably, the parts that are openable, collapsible, or removable can be vibrated to further help in removal or separation of the powder from the formed object.

The build platform may suitably be connected to a means for mechanically stirring or moving the platform, thereby allowing excess and thus unused powder to be removed from the article to be built.

The apparatus according to the present invention may suitably comprise a means for curing the article to be built.

The powder recovery system of the apparatus in accordance with the present invention suitably comprises a conduit for transporting unused powder and a powder carrier screw for moving unused powder through the conduit or it comprises a conduit for transporting unused powder and a vacuum pump for moving unused powder through the conduit. In another embodiment the powder recovery system comprises a conveyer belt for moving unused powder.

Preferably, the printing system and the powder spreading system are connected to the same guiding means. Besides lower hardware costs, this enables parallel functioning of both to increase building speed, as well as higher precision due to exact linearity of both.

The present invention also relates to a method for building a three-dimensional article in sequential cross-sectional layers in accordance with a model of the article, which method comprises the steps of:
- defining a layer of a powder material;
- applying a liquid to the layer of powder material so defined, in a pattern corresponding to the respective cross-sectional layer of the model;
- repeating these steps to form successive layers so as to obtain a three-dimensional article;
- optionally curing the three-dimensional article thus obtained; and
- recovering the (cured) three-dimensional article;
in which method use is made of an apparatus according to the present invention.

Such an article can have variable colour, mechanical, optical and electrical properties.

Where the liquid combines with the powder, the liquid and powder will react to form a solid structure.

The powder layers may all be of the same formulation. However, different powder materials can also be used for different layers, or different powder materials can be used in the same layer.

Different liquid may also be used, either at different locations on the same layer or on different layers.

Suitably, the formed layer may be up to 300 µm in thickness, though more commonly they might be up to 200 µm. Thin layers down to 80 µm or 50 µm may be achieved, and possibly even thinner layers having a thickness in the range of from 1 to 30 µm. The powder comprises preferably individual powder particles which in majority have a size in the range of from 1 nm to 70 µm. More preferably, the powder comprises individual powder particles which in majority have a size in the range of from 20 nm to 50 µm. The powder can be a polymeric material, a precursor of a metallic material, a metallic material, a ceramic material or a combination thereof.

The liquid may contain colloidal or nano-particles of ceramics, organic micro particles, metals and alloys. The viscosity of the liquid is suitably in the range of from 2 to over 3000 mPas at room temperature and will have a much lower viscosity at higher operational temperatures. Preferably, the viscosity of the liquid is in the range of from 2 to 800 mPas, at the jetting temperature.

Two or more liquids may be printed simultaneously from adjacent print heads such that the liquids combine on/around the surface of the powder.

The process lends itself very conveniently to the production of articles from a digital representation held by a computer, and is particularly suitable for use with CAD systems. Hence, the model is preferably a digital model. An article can thus be designed using CAD software, the digital information can be converted to a series of laminae in digital form and the digital representation of the laminae can be used to control the delivery of the liquid sequentially on to successive layers of the powder, in order to reproduce the article in 3-dimensions. The techniques can be used for rapid prototyping and even small scale rapid manufacture.

The produced object can be used as an actual technically functional part or be used to provide a proof of the CAD files before actual production. The technique is also suitable for in-line production use as layered encapsulants in the electronic field and for formation of micro-printed electronics and optics. The technique may also be useful in forming multi-layer structured films with polarising optical or wave guiding effects.

It will be appreciated that by using the method according to the present invention, it is possible to build up three-dimensional articles in the form of laminated blocks or items with complex shapes. By varying the characteristics across the layers including layer thickness, as they are formed, optionally on a micro-scale, it is possible to instil at least a functionality in the finished article. This functionality can take many forms, examples of which include electronic circuits and optical components. It is also possible to build the component on to a substrate which is then retained as part of the final finished article. Such a substrate might be a glass or plastics sheet which could for example form part of an optical component.

Preferably, in the powder recovery system an underpressure is applied. Thus, powder contamination of the print heads can attractively be reduced or avoided.

The method according to the present invention enables the forming of articles with much improved mechanical properties and colour patterns. The articles obtained in accordance with the present method have a high strength, a smooth surface quality, and they are ready for use shortly after fabrication, with no production of waste material and an efficient re-use of unused powder material.

Suitably, the powder spreading system uses an independent scanning unit comprising a metering device behind a counter rotating roller, in which the metering device receives certain amount of powder from a stationary powder housing (powder hopper). Preferably, the roller can apply a certain amount of pressure on the powder bed to improve compaction and or initial density. Preferably, the pressure can be applied on the forward and/or backward stroke of the movement. The powder housing can be remote from the printing system in order to prevent powder contamination of the jet print heads.

The printing system suitably scans the powder layer from opposite direction to the powder spreader and comprises a precision droplet generating system, e.g. drop on demand inkjet print heads or continuous print heads. In a preferred embodiment the continuous print head is a high viscosity print head as disclosed in WO 2004018212. Preferably, the printing system comprises more than one print head, more preferably more than two print heads. When not scanning, the print heads can be parked in a unit which is shielded from the curing mechanism. When parked, the print head can be cleaned/purged as required, within the parking unit. The housing unit of the printing system is suitably positioned remote from the powder housing unit.

The build platform of the build chamber has a bottom structure which opens to facilitate removal of unused powder through a mesh tray, a grill or a grid. Vibration of the build platform can be used to remove further amounts of unused powder material. After removal of the unused powder, the build platform can move up to deliver the finished article.

Unused powder can attractively be transferred to the one or more reservoirs for delivering a powder material. Said reservoirs can also be recharged with fresh powder using cartridges.

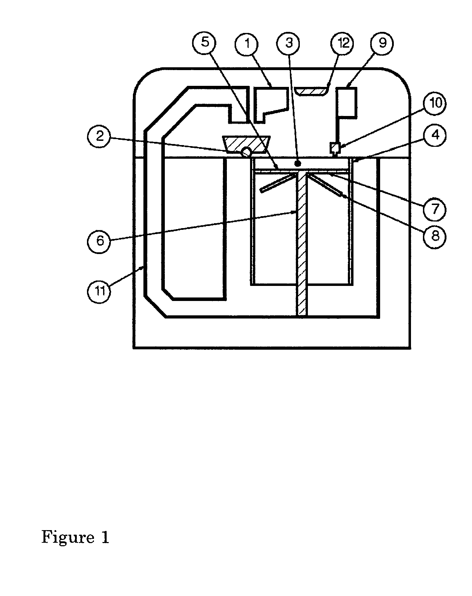

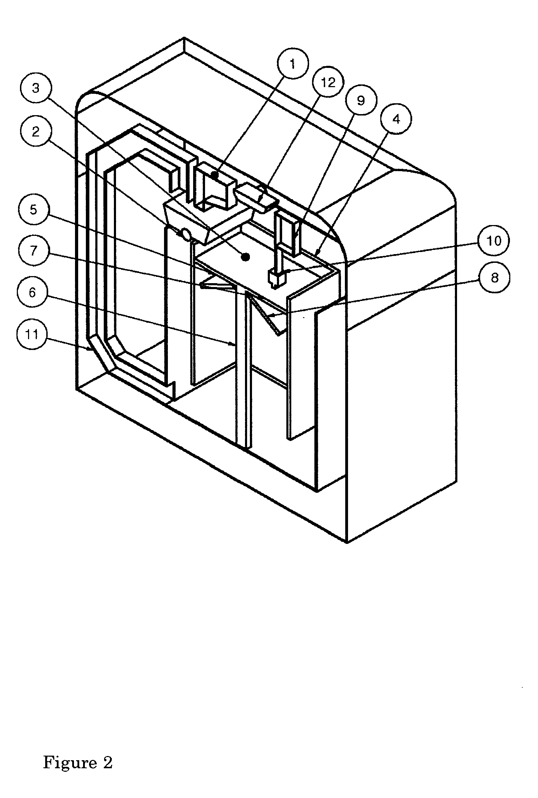

In Figure 1 a cross-sectional schematic representation of the apparatus according to the present invention is shown. In Figure 1 the powder delivering system comprises a reservoir for delivering a powder material (1) and a powder spreading system (2) which comprises a roller for applying the powder into the build chamber (3). The build chamber (3) comprises a wall (4) and a build platform (5) which is movable along the inner wall of the build chamber by means of piston (6). The build platform is made up of a un upper part (7) which comprises a grid and a lower part (8) which comprises collapsible flaps. The apparatus further comprises a reservoir (9) for delivering a liquid which is applied on the respective powder layers by means of print head (10). At least 75% of the outer wall of the build chamber (3) is in direct contact with a powder recovery system (11) which ensures that unused is recycled to the powder spreading system (2). The apparatus is further provided with means (12) for curing the article to be built. In Figure 2, a three-dimensional cross-sectional representation is shown of the apparatus depicted in Figure 1.

It will be clear from Figures 1 and 2 that the present invention provides a simple apparatus which will allow for a most efficient re-use of unused powder material.

Further, the manufacture of an end-usable rapid manufactured article can attractively be realised when use is made of the apparatus according to the present invention.

In practice the method in accordance with the present invention can, for instance, be carried out as follows:
A print job consisting of a stack of slices (in bitmap/tiff or other format) that have been prepared by a computer system can be loaded to the machine software. This can consist of a stack of slices (in bitmap / tiff or other format) prepared by a computer system. The input for the software to be used can be a 3D Geometry CAD file. The computer system can input 3D colourless geometric data as STL file (both ASCII and Binary STL models can be used) from a 3D CAD file. The software can then output a series of 2D bitmaps in a specified buffer-directory, whereby each layer that can be printed on the 3D colour printer will correspond with a separate bitmap in the buffer. The bitmaps can store RGB colouring information of at least 16 bit (65536 colours), and they may be able to have a resolution of minimal 300 DPI. The 3D coloured model can be sliced in z direction. The machine software (printer driver) can strip every image in sub-images and can set the sub-images ready for the system. The system can be capable of stacking multiple parts in one job-file consisting of bitmaps. Every bitmap may consist of one slice, which will be fed into the machine.

Subsequently, the powder bed will be prepared. The movable horizontal building platform will carry the powder and liquid from which the article will be made. The movable build chamber is able to release the unused powder by opening flaps of the build platform. In this way unused powder is passed to the powder recovery system. The article that has been built can be taken out of the build chamber at the top. The unused powder will be recycled and re-used via the powder recovery system.

During the powder bed preparation function, the powder can be dispersed over the build platform by a hopper carriage which may comprise a counter rotating roller for optimal spread of the powder over the powder bed. The excessive/overload powder is pushed over the rim or the side of the building platform and passed into powder recovery system. The present construction facilitates a most efficient re-use of unused powder. The unused powder can be transported to the hopper carriage manually or in an automatic mode.

After preparation of the computer file and powder bed, the liquid printing operation starts. A product is split up into a stack of cross sections with a predetermined thickness (also named the print slices) which are sent one after the other to the print head controller. The printer driver translates the digital information into printer carriage movement information and moves to the first line and prints all of the sub-images building the first image part. Subsequently, the print head moves back to the 'begin' position on the carriage and loops until the image is fully printed. When completed, the print carriage moves back to its home position and a fresh layer can be deposited. The printing operation may comprise printing with multiple print heads so as to provide liquids with different colours (e.g. cyan, magenta, yellow, white and black) or liquids that cure differently over time. Each print head will be supplied with liquid by an individual reservoir.

If electromagnetic radiation is used to cure the product, then prior to the irradiation (which is conducted after each layer is deposited and printed), the print heads will be moved to a standby position in a shutter closed box to prevent that the print heads will be cured by means of stray electromagnetic irradiation. The electromagnetic irradiation will be switched on for a number of seconds, after which the layer recoating process will be repeated until the final particle is obtained.

It is clear that such an apparatus can be assembled according to Individual customer request. For example, the apparatus could have more than one resin dispensing print head, going onto the same powder, in order to achieve an article which can have variable colour, mechanical, optical and electrical properties, such as stiffness, toughness, transparency and conductivity, or a combination thereof. These properties can be varied in macro areas (i.e. greater than, for instance, 1 cm²) or can be varied in a micro manner, such that individual resin droplets differ in all x,y,z directions. In this respect reference can, for instance, be made to WO 03016030.

## Claims

1. An apparatus for building a three-dimensional article in sequential cross-sectional layers, which apparatus comprises: a powder delivery system comprising one or more reservoirs for delivering a powder and a powder spreading system; a printing system for delivering a liquid; a build chamber comprising a outer wall, an inner wall and a build platform which is movable along the inner wall of the build chamber; and a powder recovery system; wherein the build platform is capable of releasing unused powder directly from the build chamber in a downward direction into the powder recovery system.

2. An apparatus for building a three-dimensional article in sequential cross-sectional layers, which apparatus comprises: a powder delivery system comprising one or more reservoirs for delivering a powder and a powder spreading system; a printing system for delivering a liquid; a build chamber comprising a outer wall, an inner wall and a build platform which is movable along the inner wall of the build chamber; and a powder recovery system; wherein more than 25% of the outer wall of the build chamber is in communication with the powder recovery system.

3. An apparatus for building a three-dimensional article in sequential cross-sectional layers, which apparatus comprises: a powder delivery system comprising one or more reservoirs for delivering a powder and a powder spreading system; a printing system for delivering a liquid; a build chamber comprising a outer wall, an inner wall and a build platform which is movable along the inner wall of the build chamber; and a powder recovery system; wherein more than 25% of the outer wall of the build chamber is in communication with the powder recovery system; and wherein the build platform is capable of releasing unused powder in a downward direction into the powder recovery system.

4. An apparatus according to claim 3, wherein the build platform is capable of releasing the unused powder directly from the build chamber in a downward direction into the powder recovery system.

5. An apparatus according to any one of claims 2-4, wherein at least 50% of the outer wall of the build chamber is in communication with the powder recovery system.

6. An apparatus according to any one of claims 2-5, wherein at least 75% of the outer wall of the build chamber is in communication with the powder recovery system.

7. An apparatus according to any one of claims 2-6, wherein the at least 25%, the at least 50% or the at least 75% of the outer wall of the build chamber is in direct communication with the powder recovery system.

8. An apparatus according to any one of claims 1-7, wherein the printing system comprises one or more nozzles.

9. An apparatus according to claim 8, wherein the printing system comprises a plurality of nozzles.

10. An apparatus according to claim 9, wherein the nozzles form part of an inkjet printer or a device including a set of nozzles generally equivalent to an inkjet print head.

11. An apparatus according to claim 10, wherein the nozzles operate on the principles of piezo inkjet technology.

12. An apparatus according to any one of claims 1-11, wherein the printing system comprises two or more print heads.

13. An apparatus according to any one of claims 1-12, wherein the powder delivery system comprises a plurality of reservoirs for delivering a powder.

14. An apparatus according any one of claims 1-13, wherein the building platform comprises an upper structure provided with openings and a bottom structure that can be opened or removed to release unused powder through the openings of the upper structure.

15. An apparatus according to claim 14, wherein the upper structure comprises a mesh tray, a grill or a grid.

16. An apparatus according to claim 14 or 15, wherein the bottom structure comprises parts that are openable, collapsible or removable.

17. An apparatus according to claim 16, wherein the bottom structure comprises parts that are openable.

18. An apparatus according to any one of claims 1-17, which further comprises a means for curing the article to be built.

19. An apparatus according to claim 18, wherein the means for curing the article to be built is an electromagnetic radiation-based system.

20. An apparatus according to any one of claims 1-19, wherein the powder recovery system comprises a conduit for transporting unused powder and a powder carrier screw for moving unused powder through the conduit or it comprises a conduit for transporting unused powder and a vacuum pump for moving unused powder through the conduit.

21. An apparatus according to any one of claims 1-20, wherein the printing system and the powder spreading system are connected to the same guiding means.

22. A method for building a three-dimensional article in sequential cross-sectional layers in accordance with a model of the article, which method comprises the steps of:
- defining a layer of a powder material;
- applying a liquid to the layer of powder material so defined, in a pattern corresponding to the respective cross-sectional layer of the model;
- repeating these steps to form successive layers so as to obtain a three-dimensional article;
- optionally curing the three-dimensional article thus obtained; and
- recovering the (cured) three-dimensional article;
in which method use is made of an apparatus as defined in any one of claims 1-21.

23. A method according to claim 22, wherein the powder material comprises a polymeric material, a precursor of a metallic material, a metallic material, a ceramic material or a combination thereof.

24. A method according to claim 22 or 23, wherein the model is a digital model.

25. A method according to any one of claims 22-24, wherein at least one of the layers of powder material comprises a different type of powder material.

26. A method according to any one of claims 22-25, wherein a plurality of different liquids is applied to at least one layer of powder material.

27. A method according to claim 26, wherein the different liquids are applied in a single pass.

28. A method according to claim 26, wherein the different liquids are applied in sequential passes.

29. A method according to any one of claims 22-28, wherein in the powder recovery system an underpressure is applied.
